Europäisches Patentamt

European Patent Office

Office européen des brevets

(11) Publication number: **0 206 970**
**A1**

## (12) EUROPEAN PATENT APPLICATION

(21) Application number: 86630084.1

(22) Date of filing: 06.05.86

(51) Int. Cl.4: **G01J 9/02** , **G01C 19/64** , **G01P 3/36**

(30) Priority: 17.05.85 US 735235

(43) Date of publication of application:
**30.12.86 Bulletin 86/52**

(84) Designated Contracting States:
**DE FR GB**

(71) Applicant: **UNITED TECHNOLOGIES CORPORATION**
**United Technologies Building 1, Financial Plaza**
**Hartford, CT 06101(US)**

(72) Inventor: **Bailey, Timothy James**
**150 Maple Road**
**Longmeadow Massachusetts 01106(US)**
Inventor: **Cramp, David Millard**
**58 Andrews Street**
**Bristol Connecticut 06010(US)**
Inventor: **Courtney, Daniel Paul**
**12 Apple Hill Road**
**Wilbraham Massachusetts 01095(US)**

(74) Representative: **Waxweiler, Jean et al**
**OFFICE DENNEMEYER S.à.r.l. 21-25 Allée Scheffer P.O.Box 41**
**L-2010 Luxembourg(LU)**

(54) Rotation induced phase modulation in passive sagnac interferometers.

(57) A passive SAGNAC interferometer is mechanically vibrated in order to modulate the path length difference travelled by counter-propagating light beams thereby introducing a time-varying non-reciprocal phase shift which causes the intensity of the interferometric output signal to be modulated at a frequency related to the frequency of the mechanical vibration. By employing filtration techniques to remove frequency components introduced by the mechanical vibration, the small signal sensitivity problem of passive SAGNAC interferometers is overcome without having to introduce any additional components into the basic interferometer.

FIG. 1

## Rotation Induced Phase Modulation in Passive SAGNAC Interferometers

Technical Field

This invention relates to fiber-optic sensors based on the SAGNAC interferometer.

Background Art

Various sensors, based on the SAGNAC interferometer, for example, rotation rate and acoustic sensors, are known.

Fiber-optic sensors using the SAGNAC principle have been shown to be extremely sensitive, potentially low-cost devices that are amenable to many applications. The use of fiber-optic SAGNAC interferometer rotation rate sensors is increasing for industrial and military purposes due to their potential for low cost and small volume with no moving parts. Fiber-optic acoustic sensors based on the Mach-Zender interferometer have high performance and offer advantages of EMI resistance, geometrical flexibility, and small size. However, the SAGNAC interferometer offers an alternative interferometric acoustic sensor that is particularly well suited to the detection of higher-frequency signals.

A basic passive SAGNAC fiber-optic interferometer includes a laser source which provides coherent light incident on a beamsplitter which divides the beam into two equal parts. The beams are then coupled into each end of a fiber-optic multi-turn coil of a certain length and radius. The light beams counter-propagate in opposite directions around the coil and are recombined by the beamsplitter to interfere at the output. If the phenomenon to be measured introduces a phase difference between the output beams, the intensity at the output will vary according to changes in the phase difference.

A SAGNAC interferometer measures nonreciprocal effects. I.e., it measures effects which depend on the direction of propagation of the light. Reciprocal effects, which affect both beams equally, cancel out upon interference and do not show up while nonreciprocal phase shifts add together.

The output of the interferometer varies as the cosine of the phase difference between the counter propagating beams. This phase difference is due to non-reciprocal effects. When the phase difference is zero, sensitivity is also zero because of operation at the peak of the cosine curve. For small phase differences sensitivity is correspondingly low. As the measured phenomenon moves further off the cosine peak the sensitivity increases until maximum sensitivity is reached where the phase difference is 90° corresponding to the steep slope of the cosine function at this point.

Thus, the problem in the prior art has been one of implementation of a 90°, nonreciprocal phase shift. It has been done directly with a Faraday cell or frequency shifter.

A widely used approach has been to introduce a time varying, reciprocal phase shift at an asymmetric location of the coil (e.g., at one end). In the time domain, such a device has a nonreciprocal effect. The phase modulator is made simply by wrapping the fiber coil around a piezoelectric cylinder, which changes the fiber length as its radius is electrically varied.

All of these techniques for overcoming the sensitivity problem in fiber-optic interferometers introduce various undesirable side effects. For instance, the Faraday cell introduces an additional non-fiber component into the loop which complicates construction and introduces extraneous nonreciprocal effects. Similarly, the piezoelectric tube technique stresses or distorts the fiber and may affect critical fiber characteristics, due to any loss of resiliency in the fiber which may occur over time.

Disclosure of Invention

The object of the present invention is to overcome the sensitivity problem that occurs in all fiber-optic interferometric sensors without introducing any components into the basic sensor.

According to the present invention, a SAGNAC interferometer is mounted on a platform within a base. Means for mechanically vibrating the platform about a given axis with respect to the base are provided. The vibrating means causes the path length difference traveled by the counter-propagating beams to be modulated. This introduces a time-varying, nonreciprocal phase shift between the beams. This in turn causes the intensity of the output signal from the interferometer to be modulated at a frequency related to the mechanical vibration. The desired information about the phenomenon to be measured is present in the output at harmonics of the modulation frequency. Suitable detection techniques such as synchronous demodulation or digital signal processing may be used to recover this information.

The present invention avoids the use of unnecessary fiber components in the sensing coil. I.e., it simplifies construction because of the lack of any need for control or bias elements in the coil. Similarly, the present invention does not stress or distort the fiber as in a piezoelectric type modulation of the path length. Thus, space is freed up within the coil for necessary minimum configuration components, i.e., a source, splitter/combiners, polarizer, detector, and amplifier; and it minimizes unwanted incidental nonreciprocal effects which are encountered in the prior art.

A placement of the phase modulator external to the interferometer allows for a higher level of reciprocity over current phase modulation or frequency shifting techniques. It achieves a minimum configuration interferometer by not imposing additional components within the loop. (For rotation sensors it biases the phenomenon being measured rather than an internal signal thereby avoiding the measurement of intermediate parameters which would increase inaccuracies). It has the advantage of simplicity of construction, potential for higher acuracy, minimal internal connections, and increased serviceability. Moveover, the prior art problem of independent measurement of the phase modulation is solved by the use of existing motion detection technology. Furthermore, the modulation frequency is independent of the propagation delay ($\tau$) around the fiber coil. This allows for rotation amplitudes/modulation frequency trade-offs.

These and other objects, features, and advantages of the present invention will become apparent in light of the following best mode description and drawings.

Brief Description of the Drawings

Fig. 1 is a block diagram illustration of a SAGNAC interferometer system, according to the present invention;

Fig. 2A is a simplified illustration of a SAGNAC interferometer;

Fig. 2B is a simplified illustration of a minimum configuration reciprocal all-fiber SAGNAC interferometer;

Fig. 3(a) is an illustration of the low sensitivity problem periodically encountered in SAGNAC interferometer sensors;

Fig. 3(b) is an illustration of a SAGNAC interferometric output having its sensitivity maximized for small phase shifts by introducing a fixed bias 90° nonreciprocal phase shift into the loop;

Fig. 4 is a simplified illustration of the technique of the present invention whereby an exemplary sinusoidal mechanical vibration imposes a modulated phase shift upon the output intensity of the interferometer which may later be filtered in order to obtain a true indication of the magnitude of the measured phenomenon;

Fig. 5 is similar to Fig. 4 except that an input signal, e.g., rate, has been introduced; and

Fig. 6 is a plan view of the transducer and base mount of Fig. 1 showing the rotation about the modulation axis in more detail.

Best Mode For Carrying Out The Invention

An interferometer is a device that makes use of the fact that waves (e.g., light) can be made to interfere. Information concerning certain phenomenon can be extracted from measurement of the interference.

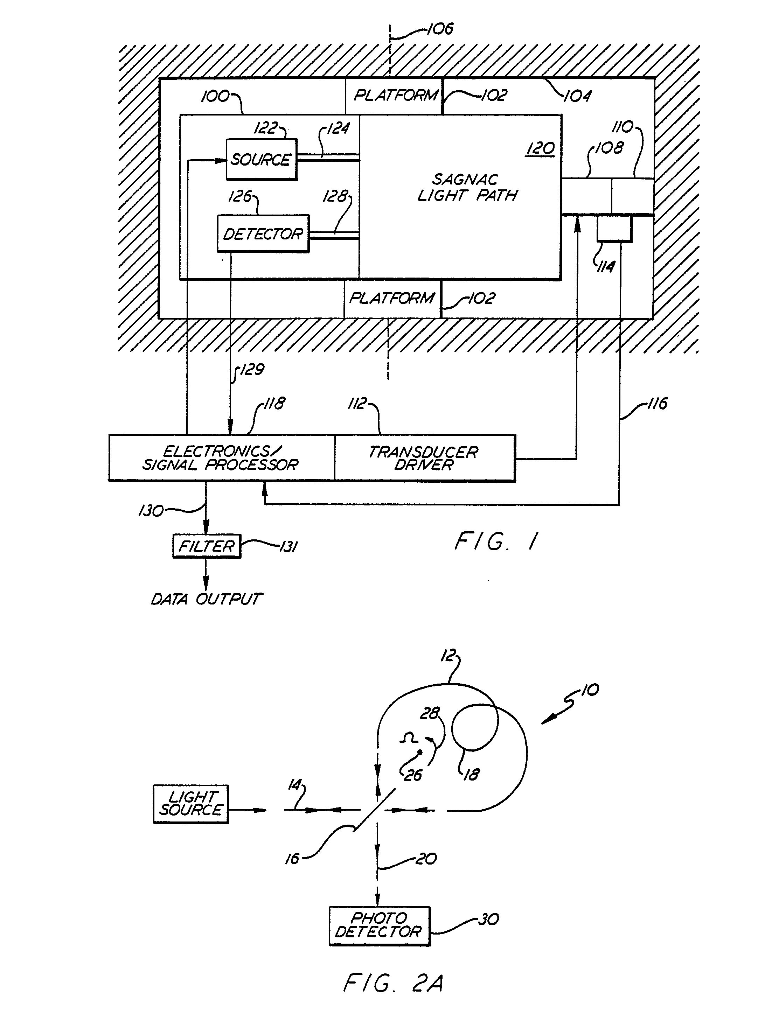

Referring now to Fig. 2A, a SAGNAC interferometer 10 has one closed path 12 with two counter-propagating light beams of the same frequency. Light is input at a fiber-optic input 14 and is split in a coupler 16 (the equivalent of a beamsplitter) so that half of the intensity is traveling in each direction around the closed path 12. The closed path 12 includes a loop 18 which may include multiturns of optical fiber. The returning beams are combined again in coupler 16 and output on an optical fiber 20 which includes the interference of interest.

The phenomenon of interest which is to be measured by the SAGNAC interferometer may include rotation, soundwave vibration, etc., and will induce a change in the path taken by one beam in comparison to that of the other. In the interferometer the result is an output intensity related to the change in the measured phenomenon.

For example, in a rotation sensor the interferometer of Fig. 2A might be rotated about an axis having a component perpendicular to the plane of the fiber-optic coil 18. A component axis 26 is shown in Fig. 2A perpendicular to the plane of the drawing and the interferometer has a component of rotation about this axis indicated by angular velocity ($\Omega$) 28. Under rotation, the effective optical path length is changed for the counter rotating beams. The path length increases for the clockwise beam in Fig. 2A because a photon of light has to travel the length of the coil plus the distance that the coil has been rotated during the travel period. In the direction opposite to the rotation, the light travels the length of the coil minus the distance that the coil has been rotated during the travel period. The difference between the clockwise and counterclockwise optical path lengths is twice the distance of rotation, or:

$$\Delta L \;=\; 2n \,\frac{L}{c}\;\frac{D}{2}\,\omega,$$

where L = Total fiber length,

D = Diameter of coil,

ΔL = Difference between clockwise and counterclockwise optical path lengths,

$\omega$ = Input angular rate,

c = Speed of light,

$\frac{L}{c}$ = is the amount of time to travel the length of the coil without rotation,

$\frac{D}{2}$ = is the radius of the coil, and

n = index of refraction of the fiber core.

This corresponds to a phase shift between the counterclockwise and clockwise light beams emerging from the coil given by:

$$\Delta\emptyset = 2\pi \frac{\Delta L}{\lambda} = 2\pi \frac{L}{c} \frac{D}{\lambda} \omega$$

where $\lambda$ = wavelength of the light souce.

Thus, it will be seen that the phase angle between the emerging light beams is proportional to the input angular rate $\omega$. This is to be distinguished with the ring laser gyro resonator for which the phase angle changes proportionally to the integral of the input rate. Hence, the fiber-optic rotation sensor is a "rate gyro" while the laser gyro is a "rate integrating gyro". Another important difference between the two rate sensors is that the laser gyro beam frequencies are shifted from each other in proportion to the input rotation rate due to the self resonance of the laser. The frequencies for the counter rotating beams in the fiber-optic rate sensor remain equal under rotation rates.

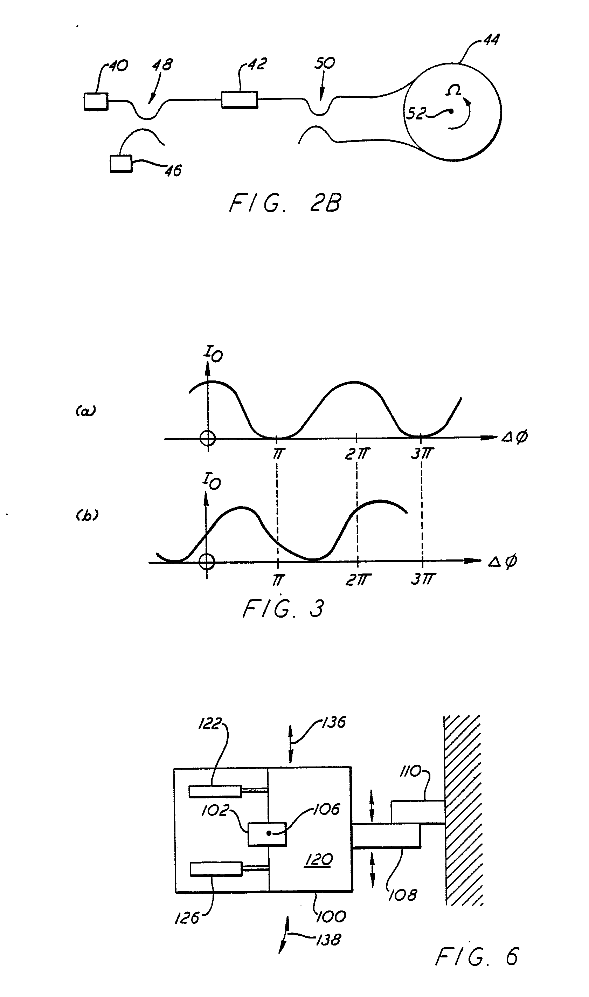

A photo detector 30 in Fig. 2A is used to sense the phase shift between the counter-rotating beams. The combined beam intensities, including the phase shift factor, at the photo detector, has intensity which is maximum for $\Delta\emptyset$ = O and minimum (O) for $\Delta\emptyset$ = $\pi$. Hence, the photo detector output varies approximately as $\cos^2(\Delta\emptyset/2)$. This is plotted in Fig. 3(a). For a small SAGNAC phase shift ( $\Delta\emptyset_s$) the slope of the curve, and thus the sensitivity of a small signal measurement, is zero. This results in the sensitivity or "quadrature" problem that occurs in all fiber-optic interferometric sensors. However, by introducing a 90° nonreciprocal phase shift there may be obtained an output curve which is shifted 90° and the small input signal sensitivity is now maximized as shown in Fig. 3(b). Thus, the problem in the prior art has been conceived as one of implementation of a 90°, nonreciprocal phase shift. This may be done directly with a Faraday cell or by asymmetrically inducing a time-varying, but reciprocal, phase shift in the fiber loop, or by changing the geometric configuration of the input coupler, all of which is known in the art. However, these techniques have various deficiencies including the introduction of extra components in the coil which introduces an undesirable complexity within the loop which often cause extraneous nonreciprocal effects.

A simplified illustration of a minimum configuration reciprocal all-fiber SAGNAC interferometer is shown in Fig. 2B. It includes a light source 40, a mode filter 42 a fiber-optic coil 44 and a detector 46. A pair of splitter/combiners 48, 50 for combining an splitting beams are also illustrated. The measured phenomenon e.g., an input rate ($\Omega$) is also shown as an input signal rotating about an axis 52.

It is the teaching of the present invention that the low sensitivity problem can be solved externally to the interferometer itself by imposing an external, mechanical, vibrational rotation motion about an axis perpendicular to the plane of the fiber-optic loop thereby superimposing a modulation of the SAGNAC phase shift. The modulated phase shift will be manifested in the output intensity at the photo detector at a frequency related to the frequency of the mechanical vibration. This modulation frequency can be filtered. For small input signals, if, after filtration the intensity is then found equal to zero, the conclusion can then confidently be drawn that the interferometer is, in fact, not subject to any input signal other than the modulation rate. In this way the small input signal sensitivity problem is avoided.

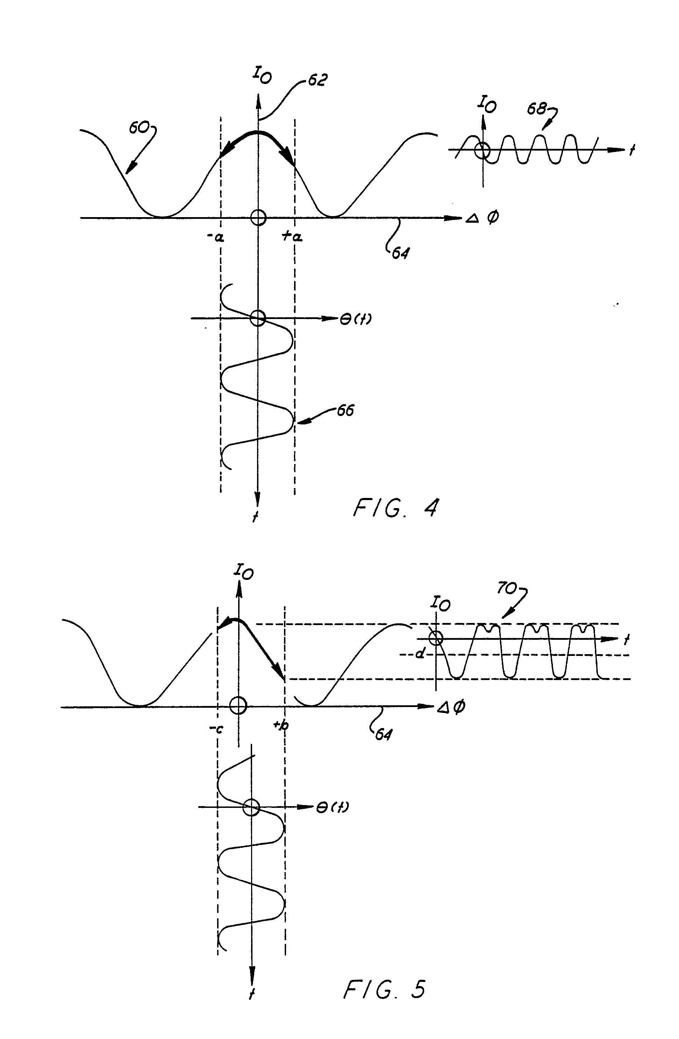

Referring now to Fig. 4, an illustration of the output intensity of the combined beams on the line 20 of Fig. 2A as detected by the photo detector 30 is illustrated by a sinusoid waveform 60 on a coordinate system having intensity ($I_0$) on the ordinate axis 62 and phase difference ($\Delta\emptyset$) on the abscissa axis 64. The sinusoid is shown having zero sensitivity at zero phase difference, i.e., the slope is zero at this point. As explained in connection with Fig. 3(b) the prior art has attempted to solve the low sensitivity problem in this region by introducing a 90° phase shift thereby maximizing sensitivity at zero input. The approach taken, according to the teaching of the present invention however, is to impose a mechanical vibratory motion about an axis perpendicular to the plane of the fiber coil thereby modulating the phase difference. Thus, in Fig. 4, the interferometer is assumed to be subject to zero input signal except for the externally applied mechanical vibration as indicated by a waveform 66 which is a time plot of the amplitude of the angle (⊖) modulation being imposed on the interferometer and having an effect on the phase difference which averages out to zero. Thus, the output intensity ($I_o$) as shown on the phase difference plot will periodically oscillate between the two points +a and -a according to the amplitude of the angle modulation imposed. In the time domain this is illustrated by a plot of output intensity ($I_o$) versus time as shown by a waveform 68 which has a frequency of double the input amplitude modulation because of the interaction of the input vibratory sinusoid with the intensity characteristic sinusoid of the interferometer. The advantage of the approach of introducing a phase difference modulation into the interferometer is that at zero input, where the sensitivity is ordinarily zero, the occurrence of any small input signal can now be easily detected by utilizing the frequency components superimposed due to the phase difference modulation. I.e., if the interferometer is not subject to any input signal then the output intensity will be zero after filtration of the superimposed sinusoidal output intensity variations. And this will be a true indication of zero input signal. Any small variations from a zero input signal will show up as true small variations in intensity. Thus, the sensitivity problem at small signals is overcome by introducing phase modulation i.e., phase modulation of the path length difference between the two beams. The mechanically vibrated interferometer with its inherent advantages is capable of utilizing the same signal processing techniques already established in the signal processing art for mechanically dithered ring lasers.

Referring now to Fig. 5, an illustration of the output intensity measured by an interferometer undergoing an input signal greater than zero is illustrated by a waveform 70. The amplitude of the angle modulation imposed by the mechanical vibration is still the same but the position of the modulation on the phase difference abscissa 64 has shifted so that the phase difference modulation takes place between -c and +b points. Thus, a non-zero input signal component is introduced into the output intensity curve plotted against time. When these intensity variations are filtered the remaining intensity having a non-zero (-d) magnitude will remain, indicative of the magnitude of the input signal.

The external mechanical vibration displacement angle may be expressed as a function of time ($\Theta_m$(t)), i.e.,

$$\Theta_m(t) = \Theta_{mo} \sin(\omega_m t).$$

Assuming a rate sensing interferometer which is at rest except for the externally imposed mechanical vibration, the rotation rate ($\Omega_m$(t)) expressed as a function of time is equivalent to the derivitive of the rate of change of the angle modulation. Thus,

$$\frac{d\Theta_{mo}(t)}{dt} = \Omega_m(t) = \omega_m \Theta_{mo} \cos(\omega_m t).$$

If this expression is substituted into the previously derived expression for the SAGNAC phase shift we obtain an expression for SAGNAC phase shift as a function of time as follows:

$$\Delta\phi_{ms}(t) = \frac{4\pi}{c\lambda_0} LR\omega_m \theta_{mo} \cos(\omega_m t)$$

Fig. 1 is an illustration of a SAGNAC interferometer 100 mounted on a platform 102 for vibration with respect to a base 104. The rotation of the interferometer 100 with respect to the base 104 is effected about an axis 106 through the platform 102. The platform is relatively stiff but has a relative flexibility which allows the desired mechanical vibration to occur at a desired frequency about the input axis. A piezoelectric transducer 108 is attached to a base mount 110. A transducer driver 112 drives the piezoelectric transducer 108 with respect the base mount 110 so as to cause the interferometer 100 to vibrate in an oscillatory manner about the platform axis 106. The resiliency of the platform 102 permits the vibration to occur at the desired frequency and amplitude without undue stress to itself. An optional sensor 114 is provided to detect the magnitude of the oscillatory motion imparted in order to close the loop if desired. This is accomplished by presenting a feedback signal on a line 116 to an electronic/signal processor module 118 which may control, among other things, the transducer driver in an open or closed loop manner. Of course, it should be understood that the transducer need not be a piezoelectric transducer. Similarly, the means and manner of introducing modulation of the path length difference i.e., the means and manner of imposing mechanical vibration is immaterial so long as the intended effect, i.e., modulation of the path length difference is effected. An attempt has been made to show the mechanical vibration technique rather abstractly and it will be understood that many different approaches may be taken to effect mechanical vibration of the interferometer which may depart radically from the approach illustrated in Fig. 1. The essential object and teaching of the present invention is concerned with mechanical vibration which modulates the measured quantity, i.e., the path length difference. Thus, any mechanical technique which effects this object of the present invention is within its spirit and scope. Of course, it will be understood that the interferometer 100 of Fig. 1 includes a SAGNAC light path 120, a light souce 122 connected to the light path by a fiber-optic connection 124, and a detector 126 similarly connected to the light path by a fiber-optic connection 128. The source 122 is controlled by the electronic/signal processor 118. The output of the detector 126 is provided on a line 129 and processed in the signal processor 118 and a data output signal 130 is provided as an indication of any rotation rate input to the interferometer 100. The filtration process described above may take place within the electronic/signal processor 118 or may take place in a filter 131. After filtration, the remaining signal is a true indication of input rate.

It will be understood that although the SAGNAC interferometer of Fig. 1 has been described with respect to a rotation sensor, it is equally applicable to any type of SAGNAC sensor. Therefore it will be understood that the invention is in no way restricted to rotation sensors merely because of the particular illustration chosen to describe the teachings of the present invention. See, for example, U.S. Patent No. 4,375,680 which describes an optical acoustic sensor.

The base mount 110 and the transducer 108 of Fig. 1 is shown in more detail in Fig. 6. There, variations in the thickness of the transducer 108 cause rotation of the interferometer 100 about the axis 106 as indicated by arrows 136, 138.

Although the invention has been shown and described with respect to a best mode embodiment thereof, it should be understood by those skilled in the art that the foregoing and various other changes, omissions and deletions in the form and detail thereof may be made therein without departing from the spirit and scope of this invention.

**Claims**

1. Apparatus for measuring variations in a phenomenon, comprising:

a SAGNAC interferometer having a light path for counter-propagating light beams which traverse said light path along differing effective path lengths which differ according to variations in the measured phenomenon, said interferometer having an interferometric output signal which varies in intensity according to said variations in the effective path length difference;

a base;

a resilient platform, mounted on said base, said platform having said interferometer mounted thereon;

and

means for mechanically vibrating said platform with respect to said base in order to modulate the path length difference traveled by said counter-propagating beams thereby introducing a time-varying, nonreciprocal phase shift between said beams (due to the SAGNAC effect) which causes the intensity of said output signal to be modulated at a frequency related to said mechanical vibration.

2. The apparatus of claim 1, further comprising filter means responsive to said intensity modulated interferometric output signal from said vibrating interferometer for filtering from said output signal the frequency component introduced into said modulated output signal by the modulation of said path length difference.

FIG. 1

FIG. 2A

FIG. 2B

(a)

(b)

FIG. 3

FIG. 6

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 028 821 (LICENTIA) <br> * page 9 above, page 10 above, figures 3, 4 * | 1,2 | G 01 J 9/02 <br> G 01 C 19/64 <br> G 01 P 3/36 |
| A | US-A-4 349 183 (T.M. WIRT et al.) <br> * abstract * | 1 | |
| A | JOURNAL OF LIGHTWAVE TECHNOLOGY, vol. LT-2, no. 2, April 1984, pages 91-107, New York, US; R.A. BERGH et al.: "An overview of fiber-optic gyroscopes" <br> * chapter E * | 2 | |

TECHNICAL FIELDS
SEARCHED (Int. Cl.4)

G 01 C 19/64
G 01 J 9/02
G 01 P 3/36

The present search report has been drawn up for all claims

| Place of search | Date of completion of the search | Examiner |
|---|---|---|
| BERLIN | 18-09-1986 | FUCHS R |